# EUROPÄISCHE PATENTSCHRIFT

(11) **EP 0 704 962 B1**
(45) Veröffentlichungstag und Bekanntmachung des Hinweises auf die Patenterteilung: **12.12.2001**
(21) Anmeldenummer: 95114489.8
(22) Anmeldetag: 14.09.1995
(51) Int. Cl.: H02P 7/69

(54) **Regelung des relativen Gleichlaufs mechanisch gekoppelter Werkzeugmaschinenachsen**
Closed-loop control of the relative synchronisation of mechanically coupled axes of machine tools
Régulation de la synchronisation relative des axes de machine-outils couplés mécaniquement

(30) Priorität: 27.09.1994 DE 4434525
(43) Veröffentlichungstag der Anmeldung: 03.04.1996
(73) Patentinhaber: SIEMENS AKTIENGESELLSCHAFT, 80333 München (DE)
(72) Erfinder: Papiernik, Wolfgang, Dr., D-91054 Erlangen (DE); Tröndle, Hans-Peter, Dr., D-91301 Forchheim (DE)

(56) Entgegenhaltungen:
- EP-A- 0 309 824
- EP-A- 0 440 868
- CH-A- 491 707
- US-A- 4 288 727

## Beschreibung

Die Erfindung bezieht sich auf ein System zur Regelung für den relativen Gleichlauf mechanisch miteinander gekoppelter Werkzeugmaschinenachsen.

Aus der europäischen Patentanmeldung 03 09 824 A1 ist ein Verfahren zur Realisierung von elektronischen Getrieben bekannt, das z.B. auch bei Synchronspindeln und Gantry-Achsen zum Einsatz kommt. Jeder der einzelnen Achsen ist hierbei ein eigener Lage-und Drehzahlregler zugeordnet. Um Störungen schneller ausregeln zu können, wird darüber hinaus ein Ausgleichsregler verwendet, der aus der Differenzlage und/oder Drehzahl aller Achsen zusätzliche Stellgrößen für den Drehzahlregler der Folgeachse bildet.

Im Falle mechanisch zwangsgekoppelter Achsen (Synchronspindeln, Gantry-Achsen, Master-Slave-Betrieb) ist allerdings die Regelung überbestimmt, weil die Drehzahl- und Lagegleichheit bereits stationär von der Mechanik vorgegeben wird. Falls hierbei die Drehzahlregelkreise nicht voll symmetrisch eingestellt sind, arbeiten die PI-Drehzahlregler der einzelnen Achsen - wenn auch nur geringfügig - gegeneinander, was zum Hochlaufen ihrer Integratoren und damit zu Verspannungen des Werkstückes führt.

Aus der EP-A-0 309 824 ist der Gedanke bekannt, für zwei Antriebsmotoren einen gemeinsamen Drehzahlausgleichsregler vorzusehen und dessen Ausgangssignals als Korrektursignal auf das Ansteuersignal der zwei Motoren zu legen. Auch könnte dieses Ausgleichskonzept auf eine größere Anzahl von Motoren angewendet werden. Der Drehzahlistwert könnte dabei durch Mittelwertbildung generiert werden. Eine zusätzliche, achspaarweise Lageregelung ist aus dieser Schrift jedoch nicht bekannt.

Die Aufgabe der vorliegenden Erfindung besteht darin, eine Regelstruktur anzugeben, mit der die obengenannten Verspannungen vermieden werden können.

Die Lösung besteht in einer Regelung mit folgenden Merkmalen:
a) einem gemeinsamen Drehzahlregler für alle Achsen,
b) einem Drehzahlistwert für den Drehzahlregler, der aus den Mittelwerten der Drehzahlistwerte der einzelnen Achsen abgeleitet ist,
c) einem gemeinsamen Drehzahlausgleichsregler für jeweils zwei Achsen, dessen Eingangsgröße von der Differenz der Drehzahlistwerte der betreffenden beiden Achsen abhängig ist und dessen Ausgangssignal zusätzlich als Korrektursignal dem Ansteuersignal der betreffenden Achsen aufschaltbar ist,
d) wobei dem Drehzahlgeber ein Lageregler vorgeschaltet ist, dessen Istwert dem Mittelwert der Lageistwerte der einzelnen Achsen entspricht und
e) wobei jeweils zwei Achsen mit gemeinsamen Drehzahlausgleichsregler auch ein gemeinsamer Lageausgleichsregler für die Lage zugeordnet ist, dessen Eingangsgröße aus der Differenz der beiden Lageistwerte gebildet ist und dessen Ausgangssignal ebenfalls in das Korrektursignal eingeht.

Über den gemeinsamen Drehzahlregler, dessen Drehzahlistwert aus dem arithmetischen Mittel aller Drehzahlen gebildet ist, wird der Arbeitspunkt festgelegt. Mit den Ausgleichsreglern können Störungen sowie Schwingungen zwischen den einzelnen Teilmechaniken optimal ausgeregelt werden. Ein großer Vorteil für die Einstellbarkeit und Stabilität des Gesamtsystems ist die völlige Entkopplung der beteiligten Einzelregelkreise. Entsprechend wie bei der Drehzahlregelung wird dabei auch eine Lageregelung mit nur einem gemeinsamen Lageregler auf die Schwerpunktlage vorgenommen. Zusätzlich werden jeweils für zwei Achsen Lageausgleichsregler verwendet. Auf letztere kann bei weniger hohen Anforderungen an die Lagegenauigkeit verzichtet werden (z.B. bei Betrieb von Zwillingsantrieben für Pressen), da bereits durch die Drehzahlausgleichsregler ein relativ guter Gleichlauf erreicht werden kann.

Das vorgenannte Regelkonzept ist auch bei der Verwendung zusätzlicher Getriebe (unterschiedliche Drehzahlniveaus einzelner Achsen) anwendbar. Hierbei sind dann die Getriebefaktoren in der Istwertaufbereitung zu berücksichtigen.

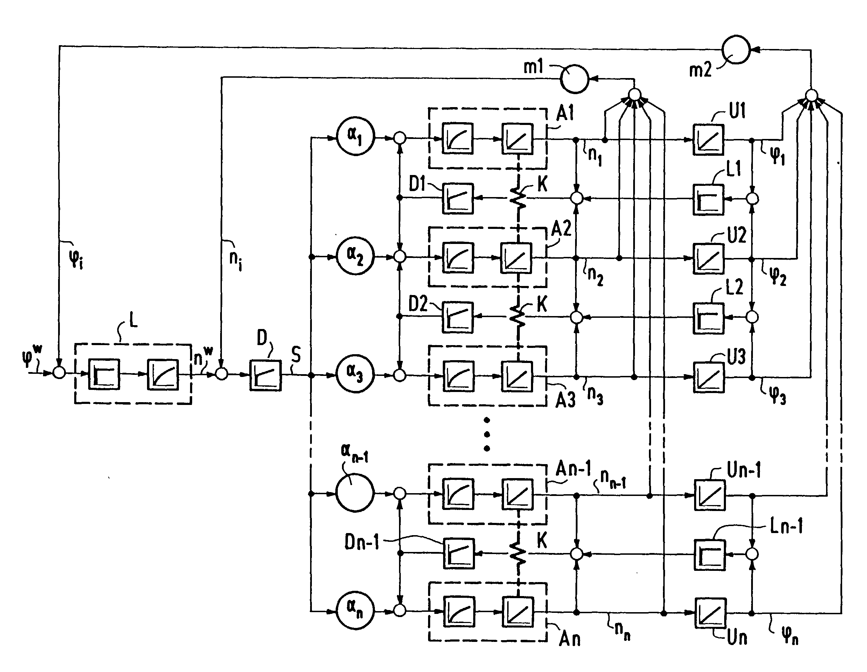

Anhand eines in der Zeichnung dargestellten Ausführungsbeispiels sei die Erfindung näher erläutert:
In der Zeichnung sind Werkzeugmaschinenachsen A1 und An gestrichelt umrandet dargestellt. Diese Antriebsachsen sollen Umrichter, Antriebsmotor und Last jeweils umfassen. Die Ansteuersignale für die einzelnen Achsen A 1 bis A n stammen von einem allen Achsen gemeinsamen Drehzahlregler D. Dieser Drehzahlregler erhält seinen Sollwert n^{w} von einem überlagerten Lageregler L. Als Lageistwert ϕ i wird der arithmetische Mittelwert der Lageistwerte ϕ 1 bis ϕ n der einzelnen Achsen A 1 bis A n genutzt (Sollwert ϕ^{w}). Zur Mittelwertbildung dient das Umformerglied m 2 in der Rückführung. Ebenso wird aus den Drehzahlen n 1 bis nₙ der einzelnen Achsen A 1 bis A n ein arithmetischer Mittelwert gebildet und als Istwert nᵢ dem Drehzahlregler D zugeführt. Hierzu dient der Umformer m 1.

Zur Berücksichtigung unterschiedlicher Streckenverstärkungen, Hochlaufzeitkonstanten usw. ist zwischen Drehzahlreglern und Achsen noch eine Einstellmöglichkeit in Form von Anpaßgliedern α 1 bis αₙ vorgesehen.

Unterschiedliche Auslegungsverhältnisse können auch gegebenenfalls in den Istwertkreisen berücksichtigt werden.

Jeweils zwei Achsen, z.B. A 1 und A 2 ist ein gemeinsamer Drehzahlausgleichsregler, in diesem Fall D 1, zugeordnet. Dieser Ausgleichsregler D 1 wird im entgegengesetzten Sinn eingangsseitig mit den Drehzahlistwerten n₁, n₂ der Achsen A1 und A2 beaufschlagt. Sein Ausgangssignal wird gegensinnig zusätzlich dem Ansteuersignal S aus dem Drehzahlregler D für die einzelnen Achsen A 1 und A 2 aufgeschaltet.

In gleicher Weise ist eine derartige Ausgleichsregelung in Form des Drehzahlausgleichsreglers D 2 für die Achsen A 2 und A 3 vorgesehen usw., bis zu den Achsen A n - 1 und A n, die über den Ausgleichsregler Dₙ₋₁ korrigierend beaufschlagt werden.

Die mechanische Kopplung der Achsen untereinander ist durch Federn K angedeutet.

Zusätzlich zu den Drehzahlausgleichsreglern können auch noch Lagerausgleichsregler L 1 bis L n - 1 vorgesehen werden. Z.B. wird der Lagerausgleichsregler L 1 mit den Lageistwerten der Achsen A 1 und A 2, d.h. also mit den Istwerten ϕ 1 und ϕ 2 beaufschlagt. Ein Ausgangssignal wird zusätzlich auf den Eingang des Drehzahlausgleichsreglers D 1 aufgeschaltet. Das gleiche gilt sinngemäß für die übrigen Lastausgleichsregler L1 bis L n - 1 mit den Lageerfassungen U1 bis Un.

Wie aus dem Vorstehenden ersichtlich, beträgt der Aufwand für die Drehzahlregelung von n-Achsen also nach wie vor n-Regler.

## Patentansprüche

1. System zur Regelung zum relativen Gleichlauf mechanisch gekoppelter Werkzeugmaschinenachsen, mit
a) einem gemeinsamen Drehzahlregler (D) für alle Achsen (A1 bis An), wobei der Drehzahlregler (D) ein Ansteuersignal (S) für alle Achsen (A1 bis An) ausgibt,
b) einem Drehzahlistwert (nᵢ) für den Drehzahlregler (D), der aus dem Mittelwert der Drehzahlistwerte (n₁,nₙ) der einzelnen Achsen abgeleitet ist,
c) einem gemeinsamen Drehzahlausgleichsregler (D1) für jeweils zwei Achsen (A1,A2), dessen Eingangsgröße von der Differenz der Drehzahlistwerte (nl,n2) der betreffenden beiden Achsen (A1,A2) abhängig ist und dessen Ausgangssignal zusätzlich als Korrektursignal dem Ansteuersignal (S) der betreffenden Achsen aufschaltbar ist, **dadurch gekennzeichnet**,
d) **daß** dem Drehzahlregler (D) ein Lageregler (L) vorgeschaltet ist, dessen Istwert dem Mittelwert der Lageistwerte der einzelnen Achsen entspricht, und
e) **daß** jeweils zwei Achsen mit gemeinsamem Drehzahlausgleichsregler (D1) auch ein gemeinsamer Lageausgleichsregler (L1) für die Lage zugeordnet ist, dessen Eingangsgröße aus der Differenz der beiden Lageistwerte gebildet ist und dessen Ausgangssignal ebenfalls in das Korrektursignal eingeht.

2. Regelungssystem nach Anspruch 1, bei dem das Ausgangssignal des Lageausgleichsreglers (L1) auf den Eingang des betreffenden Drehzahlausgleichsreglers (D1) geführt ist.

3. Regelungssystem nach Anspruch 2, das eingerichtet ist, die arithmetischen Mittelwerte von Drehzahl und Lage zu bilden.

## Claims

1. System for controlling the relative synchronisation of mechanically coupled axes of machine tools, with
a) a common speed control (D) for all axes (A1 to An), where the speed control (d) emits one control signal (S) for all axes (A1 to An),
b) an actual speed value (nᵢ) for the speed control (D), which is derived from the mean of the actual speed values (n₁, nₙ) of the individual axes,
c) a common speed equalisation control (D1) for sets of two axes (A1, A2), whose input value depends on the difference in the actual speeds (nl, n2) of the two axes in question (A1, A2) and whose output signal can also be sent as a correction signal to the control signal (S) of the respective axes, **characterised in that**
d) there is a position control (L) wired ahead of the speed control (D), whose actual value corresponds to the mean value of the actual position values of the individual axes, and
e) each set of two axes with a common speed equalisation control (D1) also has allocated to it a common position equalisation control (L1) for the position, whose input value is formed from the difference in the two actual position values and whose output signal likewise enters into the correction signal.

2. Control system in accordance with Claim 1, where the output signal of the position equalisation control (L1) is fed to the input of the respective speed equalisation control (D1).

3. Control system in accordance with Claim 2, which is set up so as to form the arithmetic mean values of the speed and position.

## Revendications

1. Système de régulation en vue du synchronisme relatif d'axes de machines-outils couplés mécaniquement, comprenant
a) un régulateur de vitesse de rotation commun (D) pour tous les axes (A 1 à A n) , le régulateur de vitesse de rotation (D) délivrant un signal de commande (S) pour tous les axes (A 1 à A n),
b) une valeur réelle de vitesse de rotation (nᵢ) pour le régulateur de vitesse de rotation (D) qui est déduite de la valeur moyenne des valeurs réelles de vitesse de rotation (n₁, nₙ) des axes individuels,
c) un régulateur de compensation de vitesse de rotation commun (D 1) pour deux axes respectivement (A 1, A 2), régulateur dont la grandeur d'entrée dépend de la différence entre les valeurs réelles de vitesse de rotation (n1, n 2) des deux axes considérés (A1, A 2) et dont le signal de sortie peut être appliqué en plus comme signal de correction sur le signal de commande (S) des axes considérés,
**caractérisé par le fait que**
d) il est branché du côté amont du régulateur de vitesse de rotation (D) un régulateur de position (L) dont la valeur réelle correspond à la valeur moyenne des valeurs réelles de position des axes individuels, et
e) il est aussi associé respectivement à deux axes avec régulateur de compensation de vitesse de rotation commun (D 1) un régulateur de compensation de position commun (L 1) pour la position, régulateur dont la grandeur d'entrée est formée à partir de la différence des deux valeurs réelles de position et dont le signal de sortie entre également dans le signal de correction.

2. Système de régulation selon la revendication 1, dans lequel le signal de sortie du régulateur de compensation de position (L 1) est envoyé sur l'entrée du régulateur de compensation de vitesse de rotation concerné (D 1).

3. Système de régulation selon la revendication 2, qui est conçu pour former les valeurs moyennes arithmétiques des vitesses de rotation et des positions.
